# EUROPÄISCHE PATENTSCHRIFT

(11) **EP 1 140 955 B1**
(45) Veröffentlichungstag und Bekanntmachung des Hinweises auf die Patenterteilung: **12.03.2003**
(21) Anmeldenummer: 99964586.4
(22) Anmeldetag: 16.12.1999
(51) Int. Cl.: C07F 17/00, C07F 7/10, C07F 5/02, C08F 10/00

(54) **METALLOCENKOMPLEXE**
METALLOCENE COMPLEXES
COMPLEXES METALLOCENES

(30) Priorität: 16.12.1998 DE 19858016
(43) Veröffentlichungstag der Anmeldung: 10.10.2001
(73) Patentinhaber: Basell Polyolefine GmbH, 50389 Wesseling (DE)
(72) Erfinder: KRISTEN, Marc, Oliver, D-67117 Limburgerhof (DE); BRAUNSCHWEIG, Holger, D-52074 Aachen (DE); VON KOBLINSKI, Carsten, D-52070 Aachen (DE)
(86) Internationale Anmeldenummer: EP9910025
(87) Internationale Veröffentlichungsnummer: WO00035928

(56) Entgegenhaltungen:
- EP-A- 0 628 566
- DE-A- 19 539 650
- CHEMICAL ABSTRACTS, vol. 132, Columbus, Ohio, US; abstract no. 78649, BRAUNSCHWEIG, HOLGER ET AL: "Synthesis and structure of [1]borametallocenophanes of titanium, zirconium, and hafnium" XP002133658 & EUR. J. INORG. CHEM. (1999), (11), 1899-1904 ,
- CHEMICAL ABSTRACTS, vol. 131, Columbus, Ohio, US; abstract no. 73736, ASHE, ARTHUR J., III ET AL: "Aminoboranediyl-Bridged Zirconocenes: Highly Active Olefin Polymerization Catalysts" XP002133659 & ORGANOMETALLICS (1999), 18(12), 2288-2290 ,
- CHEMICAL ABSTRACTS, vol. 130, Columbus, Ohio, US; abstract no. 182572, BRAUNSCHWEIG, HOLGER ET AL: "Synthesis and structure of the first [1]boratitanocenophanes" XP002133660 & EUR. J. INORG. CHEM. (1999), (1), 69-73 ,
- REETZ, MANFRED T. ET AL: "Donor complexes of bis(1-indenyl)phenylborane dichlorozirconium as isospecific catalysts in propene polymerization" CHEM. COMMUN. (CAMBRIDGE) (1999), (12), 1105-1106 , XP002133657
- CHEMICAL ABSTRACTS, vol. 127, Columbus, Ohio, US; abstract no. 248187, STELCK, DANIEL S. ET AL: "Novel ansa-Metallocenes with a Single Boron Atom in the Bridge: Syntheses Reactivities, and X-ray Structures of {Ph(L)B(.eta.5-C5H5)2}ZrCl2 (L = SMe2, PMe3)" XP002133661 & ORGANOMETALLICS (1997), 16(21), 4546-4550 , in der Anmeldung erwähnt

## Beschreibung

Gegenstand der vorliegenden Erfindung sind Metallocenkomplexe von Metallen der 4., 5. oder 6. Nebengruppe des Periodensystems, bei denen mindestens ein substituierter oder unsubstituierter Cyclopentadienylrest mit einem Element der Gruppe III des Periodensystems verbunden ist, welches Element der Gruppe III des Periodensystems Bestandteil eines Brückengliedes zwischen diesem Cyclopentadienylrest und dem Metallatom ist und welches welches Element der Gruppe III des Periodensystems als einzigen weiteren Substituenten eine stickstoff-, phosphor- oder schwefelorganische Gruppe trägt.

Metallocenkatalysatoren gewinnen immer mehr Bedeutung zur Polymerisation von α-Olefinen. Insbesondere zur Copolymerisation von Ethylen mit höheren α-Olefinen zeigen Metallocenkatalysatoren vorteilhaftes Verhalten, da sie einen besonders gleichmäßigen Comonomereinbau in das Copolymerisat bewirken. Unter den Metallocenkatalysatoren haben insbesondere verbrückte Metallocenkomplexe besonderes Interesse hervorgerufen, da sie in der Regel eine höhere Produktivität als die unverbrückten Komplexe aufweisen, einen besonders guten Comonomereinbau bewirken und außerdem zum Beispiel geeignet zur Herstellung von hochisotaktischem Polypropylen sind.

Verbrückte Metallocenkomplexe, in denen die Cyclopentadienylreste durch SiMe₂- oder C₂H₄-Brücken verbunden sind, sind seit langem bekannt. Solche Metallocenverbindungen werden z.B. in EP-A-336 128 beschrieben.

Neben den Metallocenkomplexen, bei denen die Cyclopentadienylreste durch Silizium- oder Kohlenstoffatome verbrückt sind, sind auch solche verbrückten Metallocene bekannt, in denen eines oder mehrere Boratome die Brückenfunktion übernehmen. So sind z.B. Bor-verbrückte Metallocenkomplexe bekannt, bei denen das Boratom einen Alkyl- oder Arylsubstituenten trägt (J.Organomet. Chem., 1997, 536-537, 361). Die Herstellung dieser Metallocenkomplexe ist jedoch sehr aufwendig; über Polymerisationen mit diesen Komplexen ist nichts bekannt.

In DE-19 539 650 werden ebenfalls verbrückte Metallocenkomplexe beschrieben, die unter anderem Bor als Brückenglied enthalten können. Die Boratome mit Brückenfunktion können mit verschiedenen Resten wie Alkyl, Aryl, Benzyl und Halogenen und auch durch Alkoxy oder Hydroxygruppen substituiert sein. Über das Polymerisationsverhalten derartiger Metallocenkomplexe ist wiederum nichts bekannt.

In Organometallics, 1997, 16, 4546, werden Bor-verbrückte Metallocene beschrieben, in denen das Borbrückenatom durch eine Vinylgruppe substituiert ist und zusätzlich durch eine Lewis-Base koordiniert wird. Die Ausbeuten bei der Synthese dieser Komplexe sind allerdings sehr schlecht und die Polymerisation von Ethylen verläuft unbefriedigend und führt nur zu niedermolekularem Polymer.

In EP-A-0 628 566 werden verbrückte Metallocenkomplexe beschrieben, deren generische Formel als Brückenatome neben Kohlenstoff, Silizium, Zinn, Germanium, Aluminium, Stickstoff und Phosphor auch Bor nennt und in denen diese Brückenatome durch eine Vielzahl von Substituenten, unter denen unter anderem die Dialkylaminogruppe genannt wird, substituiert sein können. Metallocenkomplexe mit Amino-substituierter Borbrücke werden jedoch an keiner Stelle explizit genannt, noch werden Eigenschaften solcher Komplexe beschrieben.

Die im Stand der Technik bekannten Bor-verbrückten Metallocenkomplexe sind jedoch zum großen Teil schwer herstellbar und bieten nicht oder nur sehr eingeschränkt die Möglichkeit, durch Elektronen drückende Substituenten am Boratom die elektronischen Verhältnisse in den Cyclopentadienylgruppen zu beeinflussen und somit Einfluß auf die katalytische Aktivität der Komplexe nehmen zu können.

Der vorliegenden Erfindung lag daher die Aufgabe zugrunde, Metallocenkomplexe bereitzustellen, welche die beschriebenen Nachteile nicht mehr aufweisen, die einfach herzustellen sind, und welche insbesondere die Möglichkeit bieten, die elektronischen Verhältnisse an den Cyclopentadienylresten zu beeinflussen.

Demgemäß wurden die eingangs erwähnten Metallocenkomplexe gefunden. Weiterhin wurden Verfahren zur Herstellung solcher Metallocenkomplexe sowie die Verwendung der Metallocenkomplexe als Katalysatorkomponente für die Homo- und Copolymerisation von C₂-C₁₀-α-Olefinen gefunden.

Als Element der Gruppe III des Periodensystems sind besonders Bor und Aluminium zu nennen, wobei Bor besonders bevorzugt ist.

Unter dem einzigen weiteren Substituenten, der, neben den Bindungen zu einem Cyclopentadienylrest und den anderen Bestandteilen des Brückengliedes, die dritte vom Element der Gruppe III des Periodensystems ausgehende Valenz besetzt, sind besonders solche stickstoff-, phosphor- oder schwefelorganischen Gruppen zu nennen, die neben diesen Heteroatomen bis zu 20 Kohlenstoff- und bis zu 4 Siliziumatome enthalten.

Die Metallocenkomplexe der vorliegenden Erfindung können 1 oder 2 Cyclopentadienylreste enthalten. Bevorzugt sind Metallocenkomplexe der allgemeinen Formel I 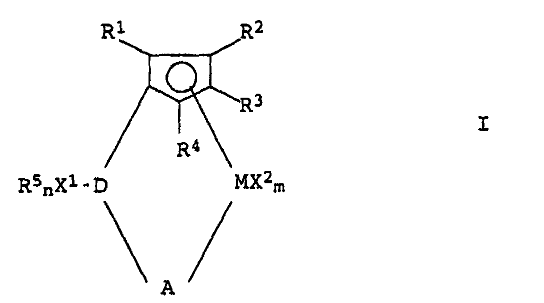 in welcher die Variablen folgende Bedeutung haben:
- M: ein Metallatom der 4., 5. oder 6. Nebengruppe des Periodensystems,
- D: ein Element der Gruppe III des Periodensystems
- R¹,R²,R³,R⁴: Wasserstoff, C₁- bis C₁₀-Alkyl, 5-7-gliedriges Cycloalkyl, welches seinerseits mit einer C₁-C₁₀-Alkylgruppe substituiert sein kann, C₆- bis C₁₅-Aryl oder Arylalkyl, wobei zwei benachbarte Reste R¹ bis R⁴ auch 5-7-gliedrige cyclische Gruppen bilden können, welche ihrerseits mit C₁-C₁₀-Alkylgruppen oder SiR⁶₃-Gruppen substituiert sein können oder weitere anellierte Ringsysteme enthalten können,
- R⁵: Wasserstoff, C₁-C₁₀-Alkyl, C₆-C₁₅-Aryl oder -Arylalkyl oder C₁-C₁₀-Trialkylsilyl,
- R⁶: C₁- bis C₄-Alkyl,
- m: Zahl der Nebengruppe des Metallatoms M minus 2,
- n: 2 wenn X¹ Stickstoff oder Phosphor bedeutet, 1 wenn X¹ Schwefel bedeutet,
- X¹: Stickstoff, Phosphor oder Schwefel,
- X²: Wasserstoff, C₁-C₁₀-Hydrocarbyl, N(C₁-C₁₅-Hydrocarbyl)₂ oder Halogen,
- A: ein Rest 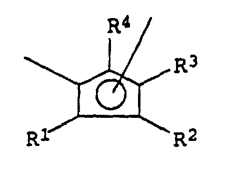 oder ein Rest, welcher über ein Sauerstoff-, Schwefel-, Stickstoff- oder Phosphoratom an M koordiniert ist.

Als Metallatome M kommen insbesondere die Elemente der 4. Nebengruppe des Periodensystems in Frage, also Titan, Zirkonium und Hafnium, wobei Titan und Zirkonium und insbesondere Zirkonium besonders bevorzugt sind.

Die Cyclopentadienylgruppen in Formel I können substituiert oder unsubstituiert sein. Unter den substituierten Metallocenkomplexen zeigen besonders solche, die mit C₁- bis C₄-Alkylgruppen substituiert sind, besonders vorteilhafte Eigenschaften. Als Alkylsubstituenten sind z.B. Methyl, Ethyl, n-Propyl und n-Butyl zu nennen. Die Cyclopentadienylreste können einfach oder mehrfach substituiert sein, wobei besonders einfach und doppelt substituierte Cyclopentadienylreste sich als vorteilhaft erwiesen haben. Bevorzugt sind weiterhin solche Cyclopentadienylreste, in denen 2 benachbarte Reste R¹ bis R⁴ zu 5- bis 7-gliedrigen cyclischen Gruppen verbunden sind. Zu nennen sind beispielsweise Cyclopentadienylgruppen, die sich vom Indenyl, Tetrahydroindenyl, Benzindenyl oder Fluorenyl ableiten, wobei diese Ringsysteme ihrerseits wieder mit C₁- bis C₁₀-Alkylgruppen oder auch mit Trialkylsylylgruppen substituiert sein können.

Bei den erfindungsgemäßen Metallocenkomplexen mit 2 Cyclopentadienyleinheiten ist das Brückenatom des Elements der Gruppe III des Periodensystems direkt mit diesen beiden Cyclopentadienyleinheiten verbunden.

Unter diesen Dicyclopentadienylkomplexen sind besonders Metallocenkomplexe, in welchen
- A: ein Rest 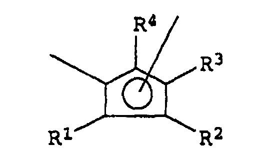
ist, bevorzugt.

Im Falle von Monocyclopentadienylkomplexen ist dagegen der Rest A kein Cyclopentadienylrest, sondern ein Rest, welcher über ein Sauerstoff-, Schwefel-, Stickstoff- oder Phosphoratom an M koordiniert ist. Als Gruppe A kommen insbesondere folgende Atome oder Gruppen in Betracht: -O-, -S-, -NR⁹-, -PR⁹-, oder ein neutraler 2-Elektronendonor-Ligand, wie -OR⁹, -SR⁹, -NR⁹₂ oder -PR⁹₂. R⁹ hat dabei die Bedeutung von Wasserstoff oder Alkyl-, Aryl-, Silyl-, halogenierten Alkyl- oder halogenierten Arylgruppen mit bis zu 10 Kohlenstoffatomen. Besonders bevorzugt sind Metallocenkomplexe, in welchen A eine Gruppe

―ZR⁷ ₂―NR⁸―

ist, in welcher
- Z: Silizium oder Kohlenstoff und
- R⁷,R⁸: Wasserstoff, Silyl, Alkyl, Aryl oder Kombinationen dieser Reste mit bis zu 10 Kohlenstoff- oder Siliziumatomen
bedeuten.

Als Reste R⁷ und R⁸ sind dabei insbesondere Wasserstoff, Trimethylsilyl, Methyl, tert. Butyl oder Ethylgruppen zu nennen. Z ist vorzugsweise ein Kohlenstoffatom.

In den erfindungsgemäßen Metallocenkomplexen ist das Brückenatom des Elements der Gruppe III des Periodensystems, welches an sich lewissauren Charakter hat, mit einer Verbindung mit Lewisbasen-Charakter substituiert. Der Lewisbasen-Substituent beeinflußt durch seine Elektronendonor-Funktion die elektronischen Verhältnisse am Cyclopentadienylrest und damit auch die elektronische Umgebung des Metallatoms. Der Lewisbasen-Substituent kann über ein Stickstoff-, Phosphor- oder Schwefelatom an das Brückenatom des Elements der Gruppe III des Periodensystems gebunden sein, wobei Substituenten mit einem Stickstoffatom besonders bevorzugt sind. Das Atom X¹ kann entweder Wasserstoff, C₁- bis C₁₀-Alkylgruppen oder C₁- bis C₁₀-Trialkylsilylgruppen tragen. Als Alkylgruppen kommen dabei insbesondere C₁- bis C₄-Alkylgruppen und ganz besonders Methyl- oder Ethylgruppen in Betracht.

Das Zentralatom M ist außer mit den genannten Liganden weiterhin mit Liganden X² substituiert. Als Liganden X² kommen insbesondere niedere Alkylgruppen wie Methyl und Ethyl in Betracht, bevorzugt ist X² jedoch Halogen und besonders bevorzugt Chlor.

Die erfindungsgemäßen Metallocenkomplexe können auf unterschiedlichen Wegen hergestellt werden. Als vorteilhaft z.B. für Verbindungen mit einem Borbrückenatom hat sich ein Verfahren zur Herstellung solcher Metallocenkomplexe erwiesen, bei dem man eine Verbindung R⁵ₙX¹-BY₂ (II), in welcher Y Halogen bedeutet, mit einer Verbindung 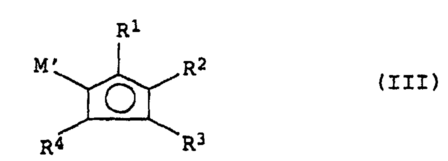 in welcher M' ein Alkali- oder Erdalkalimetall bedeutet, in Gegenwart eines Metallalkyls umsetzt und dann das Reaktionsprodukt mit einer M-Halogenid-Verbindung und zuletzt mit einem Oxidationsmittel reagieren läßt.

In Formel (II) ist Y vorzugsweise Chlor. Die Herstellung von Verbindungen der allgemeinen Formel (II) ist z.B. in Angew.
Chem. 1964, 76, 499 beschrieben. Die Synthese der erfindungsgemäßen Metallocenkomplexe nach den oben beschriebenen Verfahren ist besonders einfach und kann in nur einem Reaktionsgefäß vorgenommen werden. Das Metallalkyl dient dabei als Deprotonierungsreagenz, vorzugsweise werden Alkali- oder Erdalkalialkyle und insbesondere Butyllithium eingesetzt. Als N-Halogenidverbindung sind z.B. Titantrichlorid-Derivate, besonders bevorzugt Titantrichlorid-tris-THF-addukt zu nennen. Als Oxidationsmittel in der abschließenden Oxidationsreaktion kann beispielsweise Bleidichlorid eingesetzt werden. Der Metallocenkomplex kann nach Filtration des Reaktionsgemisches aus der Lösung isoliert werden.

Die erfindungsgemäßen Metallocenkomplexe können als Katalysatorkomponenten für die Homo- und Copolymerisation von C₂- bis C₁₀-α-Olefinen verwendet werden. Zur Polymerisation ist es im allgemeinen erforderlich, die Metallocenkomplexe durch geeignete Metalloceniumionen-bildende Verbindungen in einen kationischen Komplex zu überführen. Als geeignete Metalloceniumionen-bildende Verbindungen kommen z.B. Aluminoxane, vorzugsweise solche mit einem Oligomerisierungsgrad von 3 bis 40, besonders bevorzugt von 5 bis 30 in Betracht.

Neben den Aluminoxanen sind als kationenbildende Verbindungen insbesondere Boran- und Boratverbindungen zu nennen, die ein nichtkoordinierendes Anion darstellen oder in ein solches überführt werden können, und mit dem Metalloceniumkomplex ein Ionenpaar bilden können. Geeignete derartige Aktivierungsreagenzien für die Metallocenkomplexe sind dem Fachmann geläufig und werden beispielsweise in EP-B1-0468537 beschrieben.

Besonders für Polymerisationen in der Gasphase und in Suspension kann es erforderlich sein, die Metallocenkomplexe und ggf. die Aktivierungsreagenzien auf Trägermaterialien aufzubringen. Solche Trägermaterialien und Methoden zum Trägern von Katalysatorkomplexen sind dem Fachmann hinreichend bekannt. Als Trägermaterialien kommen insbesondere anorganische Oxide wie Kieselgel, Aluminiumoxid oder Magnesiumsalze in Betracht.

Mit Hilfe der genannten Katalysatorsysteme lassen sich Polyolefine, insbesondere Polymerisate von Alk-1-enen herstellen. Darunter werden Homo- und Copolymerisate von C₂-C₁₀-Alk-1-enen verstanden, wobei als Monomere vorzugsweise Ethylen, Propylen, But-1-en, Ent-1-en und Hex-1-en verwendet werden. Besonders geeignet sind diese Katalysatorsysteme für die Copolymerisation von Ethylen mit But-1-en oder Hex-1-en.

Als Polymerisationsverfahren kommen alle bekannten Verfahren in Betracht, also beispielsweise Gasphasenverfahren, Suspensionsverfahren oder auch Polymerisationsverfahren in Lösung.

Eingesetzt zur Polymerisation von Ethylen und zur Copolymerisation von Ethylen mit anderen α-Olefinen zeigen die erfindungsgemäßen Metallocenkomplexe gute Polymerisationsaktivität und führen dabei zu Polymerisaten mit relativ großem Molekulargewicht. Die folgenden Beispiele erläutern die Erfindung.

### Beispiele

Die Ligand- und Komplexsysnthesen wurden unter Ausschluß von Luft und Feuchtigkeit durchgeführt. Folgende Reagenzien wurden nach Literaturvorschriften hergestellt: (Me₃)Si)₂NBCl₂ (Angew. Chem. 1964, 76, 499), Na(C₅H₅) (Chem. Ber. 1956, 89, 434), Ti(NMe₂)₄ (J. Chem. Soc., 1960, 3857), [TiCl₃(THF)₃] (Inorg. Synth. 1982, 21, 135), (C₄H₈N)₂BCl (Chem. Ber. 1994, 127, 1605), (i-Pr)₂NBCl₂ (J. Chem. Soc., 1960, 5168).

NMR: Varian Unity 500 bei 499.843 MHz (¹H, interner Standard TMS), 150.364 MHz (¹¹B, BF₃*OEt₂ in C₆D₆ als externer Standard), 123.639 MHz (¹³C{¹H}, APT, interner Standard TMS), wenn nicht besonders gekennzeichnet wurden alle NMR-Spektren in CD₂Cl₂ als Lösungsmittel aufgenommen. Massenspektren wurden auf einem Finnigan MAT 95 (70eV) aufgenommen und die Elementaranalysen (C, H, N) mit einem Carlo-Erba elemental analyzer, model 1106 erhalten.

### Beispiel 1

### Herstellung von Li₂[(Me₃Si)₂NB(C₅H₄)₂] (1)

8,23 g (93,54 mmol) Na(C₅H₅) wurden in 100 ml Hexan suspendiert. Bei Zimmertemperatur wurden eine Lösung von 11,13 g (46,05 mmol) (Me₃Si)₂NBCl₂ in 20 ml Hexan zugetropft. Nach 2-stündigem Rühren wurde das Reaktionsgemisch auf 0°C gekühlt. Dazu wurden 57,6 ml (92,10 mmol) einer 1,6 molaren Lösung von Butyllithium in Hexan tropenweise zugegeben. Sofort entstand ein weißer Niederschlag. Das Reaktionsgemisch wurde auf Zimmertemperatur erwärmt und dann noch eine Stunde gerührt. Dann wurden die flüchtigen Bestandteile im Vakuum entfernt und der feste Rückstand mit 150 ml Hexan über Nacht extrahiert. Die Mischung wurde filtriert und der Feststoff im Vakuum getrocknet.

Ausbeute: 14,13 g (98 %) weißer pyrophorer Feststoff.
¹H-NMR ([D₈]THF): δ = 0.01 (s, 18 H, Si(CH₃)₃), 5,83 (m, 4H, C₅H₄), 6,45 (m, 4H, C₅H₄).
¹¹B-NMR: δ = 46,6 (S)
¹³C-NMR: δ = 4,31 (s, Si(CH₃)₃), 103,16, 106,63, 116,63 (C₅H₄)

### Beispiel 2

### Herstellung von Cl₂Ti[(C₅H₄)₂BN(SiMe₃)₂] (2)

### Methode A:

Wie oben beschrieben wurden 3,20 g (13,24 mmol) (Me₃Si)₂NBCl₂ und 2,39 g (27,17 mmol) Na(C₅H₅) zur Reaktion gebracht. Zu dem erhaltenen Filtrat wurden 16,6 ml einer 1,6 molaren Lösung von Butyllithium in Hexan gegeben. Die leicht gelbe Suspension wurde 2 h bei Zimmertemperatur gerührt und dann auf -100°C abgekühlt. Dann wurden 4,90 g (13,24 mmol) TiCl₃(THF)₃ und 20 ml THF dazugegeben. Das Reaktionsgemisch wurde auf Zimmertemperatur erwärmt, wobei sich die Farbe von leicht braun nach dunkel violett änderte. Die Suspension wurde 3 h gerührt und dann mit 1,84 g (6,62 mmol) PbCl₂ behandelt. Nach Rühren für 16 h wurden die flüchtigen Bestandteile im Vakuum entfernt. Der erhaltene Feststoff wurde mit 50 ml Dichlormethan extrahiert, dann wurde abfiltriert. Ausbeute: 4.43 g (80 %) dunkelroter Feststoff nachdem die Lösung bei -30°C gelagert wurde.

¹H-NMR: δ = 0,08 (s, 18 H, Si(CH₃)₃), 5,53 (m, 4H, C₅H₄), 7,05 (m, 4H, C₅H₄).
¹¹B-NMR: δ = 46,6 (s)
¹³C-NMR: δ = 4,89 (s, Si(CH₃)₃), 114,85, 133,44 (C₅H₄)
MS: m/z (%): 417 (35) (M⁺), 402 (15) (M⁺-Me), 382 (25) (M⁺-Cl) C₁₆H₂₆NBCl₂Si₂Ti (418,18): ber.: C 45.96, H 6.27, N 3.35; gef.: C 46,56, H 7,05, N 2,87

### Beispiel 3

### Herstellung von (Me₂N)₂Ti[(C₅H₄)₂BN(SiMe₃)₂] (3)

Wie oben beschrieben wurden 2,08 g (8,60 mmol) (Me₃Si)₂NBCl₂ und 1,51 g (17,20 mmol) Na(C₅H₅) zur Reaktion gebracht. Das erhaltene Filtrat wurde auf -30°C gekühlt und eine Lösung von 1,93 g (8,60 mmol) (Ti(NMe₂)₄ in 5 ml Hexan tropfenweise zugegeben. Das Reaktionsgemisch wurde langsam auf Zimmertemperatur erwärmt, wobei sich die Farbe von gelb nach dunkelrot veränderte. Nach Rühren für 1 h wurden die flüchtigen Bestandteile im Vakuum entfernt und der erhaltene Feststoff in 10 ml Hexan suspendiert. Nach Filtration und anschließendem Entfernen der flüchtigen Bestandteile im Vakuum wurden 1,05 g (28 %) (3) als dunkelroter Feststoff erhalten.

¹H-NMR: δ = 0,09 (s, 18 H, Si(CH₃)₃), 3,14 (s, 12 H, N(CH₃)₂), 5,42 (m, 4H, C₅H₄), 6,73 (m, 4H, C₅H₄).
¹¹B-NMR: δ = 46,9 (s)
¹³C-NMR: δ = 4,89 (s, Si(CH₃)₃), 51,11 (N(CH₃)₂ 112,73, 131,66 (C₅H₄)
C₂₀H₃₈N₃BSi₂Ti (435.43): ber.: C 55,17, H 8,80, N 9,65;
gef.: C 55,62, H 8,22, N 9,59

### Beispiel 4

### Herstellung von (Me₂N)ClTi[(C₅H₄)₂BN(SiMe₃)₂] (4)

Wie oben beschrieben wurden 1,09 g (4,50 mmol) (Me₂Si)₂NBCl₂ und 0,88 g (10,00 mmol) Na(C₅H₅) zur Reaktion gebracht. Das erhaltene Filtrat wurde auf -30°C gekühlt und eine Lösung von 1,01 g (4,50 mmol) Ti(NMe₂)₄ in 5 ml Hexan tropfenweise zugegeben. Das Reaktionsgemisch wurde langsam auf Zimmertemperatur erwärmt. Zu dieser Lösung wurden 0,84 g (4,50 mmol) (C₄H₈N)₂BCl gegeben. Nach Rühren für 1 h wurden die flüchtigen Bestandteile im Vakuum entfernt und der erhaltene Feststoff in 20 ml Hexan suspendiert. Nach Filtration und anschließendem Lagern bei -30°C erhielt man 0,79 g (41 %) (4) als dunkelroten kristallinen Feststoff.

¹H-NMR (CDCl₃): δ = 0,28 (s, 18 H, Si(CH₃)₃), 3,26 (s, 6 H, N(CH₃)₂), 5,08 (m, 2H, C₅H₄), 5,29 (m, 2H, C₅H₄), 6,62 (m, 2H, C₅H₄), 6,83 (m, 2H, C₅H₄).
¹¹B-NMR: δ = 46,4 (s)
¹³C-NMR: δ = 7,53 (s, Si(CH₃)₃), 57,54 (N(CH₃)₂) 115,73, 117,57, 126,93, 128,54 (C₅H₄)
C₁₈H₃₂N₂BCISi₂Ti (426,80): ber.: C 50,66, H 7,56, N 6,56;
gef.: C 50,23, H 7,59, N 6,39

### Beispiel 5

### Herstellung von Cl₂Ti[(C₅H₄)₂BN(SiMe₃)₂] (2)

### Methode B:

Wie für (4) beschrieben wurden 1,45 g (6,00 mmol) (Me₃Si)₂NBCl₂ und 1,08 g (12,30 mmol) Na(C₅H₅) zur Reaktion gebracht. Zu dem erhaltenen Filtrat wurde eine Lösung von 1,34 g (6,00 mmol) Ti(NMe₂)₄ in 5 ml Hexan tropfenweise zugegeben. Das Reaktionsgemisch wurde anschließend mit 2,24 g (12,00 mmol) (C₄H₈N)₂BCl versetzt. Man erhielt 0,38 g (15 %) (2) als dunkelroten kristallinen Feststoff.

### Beispiel 6

### Herstellung von (i-Pr)₂NB(C₅-H₅)₂ (5)

Zu einer Suspension aus 10,0 g (113,6 mmol) Na(C₅H₅) in 100 ml Hexan wurde bei 20°C eine Lösung aus 10,33 g (56,8 mmol) (i-Pr)₂NBCl₂ in 25 ml Hexan getropft. Nachdem die exotherme Reaktion abgeklungen war, wurde 2 d bei 20°C gerührt. Das ¹¹B-NMR-Spektrum der Reaktionslösung zeigte dann nur noch 1 Signal bei etwa 40 ppm für das disubstituierte Produkt (Edukt: 31 ppm, mono-cp-chlor-Produkt: 35 ppm). Die Reaktionsmischung wurde von ausgefallenem NaCl abfiltriert.

Zur Reindarstellung wurde das Lösungsmittel im Vakuum entfernt, wobei ein gelblichorangefarbenes trübes Öl zurückblieb. Der Rückstand wurde einer fraktionierenden Destillation bei 5* 10⁻² mbar unterworfen. Das Produkt wurde bei dem angegebenen Druck bei 72-75°C zunächst als klare, gelbliche Flüssigkeit, nach 10 min bei 20°C in Form leicht gelblicher, niedrigschmelzender Kristalle erhalten (Ausbeute 18 %, thermolabile Substanz, größtenteils Zersetzung bei der Destillation).

Analytik: ¹¹B-NMR (C₆D₆) : 40,18 ppm, ¹H-NMR C₆D₆) : 1,06, 1,08, 1,14 (je dublett, CH₃ am iso-prop. 3 Isomere!); 2,85, 2,94, 3,04 (je multiplett, CH₂ am cp-Ring); 3,62-3,92 (3* multiplett, CH am iso-prop.); 6,2-6,8 (multipletts, CH am cp-Ring). MS (EI) (fragment, %): 241 (M⁺, 95 %), 226 (M'-CH₃, 95 %), 198 (M⁺-iprop, 30 %), 176 (M⁺-cp, 45 %) (korr. Isotopenmuster)

### Beispiel 7

### Herstellung von (i-Pr)₂NB(C₅H₅)₂Li₂ (6)

Zu dem Filtrat der Reaktionslösung von (5) wurden bei 10°C 2 Äquivalente Butyllithium-Lösung (1,6 M) zugetropft, und bei 20°C über Nacht gerührt, wobei ein schneeweißer Feststoff ausfiel. Der Feststoff wurde unter Schutzgas abfiltriert und 2 mal mit je 50 ml Hexan gewaschen. Man erhielt das Dilithiosalz als weißes, stark pyrophores Pulver in quantitativer Ausbeute.

Analytik: ¹H-NMR (D₈-THF): 1,23 ppm (dublett, CH₃); 4,52 (multiplett, CH am isoprop): 5,73 und 5,83 (je pseudo-triplett, CH am cp).
¹¹B-NMR D₈-THF: 41,86 ppm.

### Beispiel 8

### Herstellung von (i-Pr)₂NB(C₅H₄)₂Ti(Cl)NMe₂ (7)

Eine Lösung aus 15 mmol (5) in 30 ml Hexan wurde auf -60°C gekühlt und eine Lösung aus 3,35 g (15 mmol) Ti(NMe₂)₄ in 10 ml Hexan zugetropft. Die Lösung wurde langsam auf 20°C erwärmt, wobei bei etwa -15°C eine deutliche tief rote Färbung der Reaktionslösung einsetzte. Die Lösung wurde 1 h bei 20°C gerührt und mit 1,38 g (7,5 mmol) (C₄H₈N)₂BCl umgesetzt, weitere 2 h bei 20°C gerührt im Vakuum auf etwa 50 % eingeengt und bei -30°C zur Kristallisation gelagert. Nach 1 Tag wurde der ausgefallene Feststoff abfiltriert. Ausbeute: 3,02 g (55 %)
Analytik (C₆D₆) : ¹¹B-NMR: 40,3 ppm; ¹H-NMR: 1,04 (d, 12 H, CHCH₃); 3,10 (s, 6 H, N(CH₃)₂; 4,87, 5,43, 6,70, 6,90 (je m, je 2H, CH_{cp}) MS (El); 366 (M⁺, 15 %), 322 (M⁺-NMe₂, 100 %), 287 (M⁺-NMe₂-Cl, 10 %), 176 (TiCp₂, 10 %).

### Beispiel 9

### Herstellung von (i-Pr)₂NB(C₅H₄)₂TiCl₂ (8)

Die Herstellung erfolgte analog zur Darstellung von (7) unter Einsatz von 5,9 mmol (5) in 20 ml Hexan, 6,0 mmol (1,36 g) Ti(NMe₂)₄ in 5 ml Hexan und 6,1 mmol (1,11 g) (C₄H₈N)₂BCl

Ausbeute: 920 mg (43 %)
¹¹B-NMR: 40,7; ¹H-NMR: 1,36 (d, 12H, CHCH₃); 5,61, 7,06 (je m, je 4H, CH_{cp}).

### Beispiel 10

### Herstellung von (Me₃Si)₂NB(C₅H₄)₂ZrCl₂ (9)

Zu einer Suspension von 3,7 g (11 mmol) (1) in 30 ml Diethylether wurden bei -70°C 4,13 g (11 mmol) ZrCl₄*2THF als Feststoff zugegeben und mit 20 ml Toluol nachgespült. Die Reaktionsmischung wurde im Kühlbad langsam auf Zimmertemperatur erwärmt, wobei sich die anfangs leicht gelbliche Farbe intensivierte. Danach ließ man für 16 h bei Zimmertemperatur rühren. Die Lösung wurde filtriert und dann im Vakuum auf ca. 50 % des Ausgangsvolumens eingeengt. Diese Lösung wurde bei -30°C gelagert. Nach 24 h erhielt man gelbe Kri-stalle. Es wurde abfiltriert und die Mutterlauge eingeengt und erneut bei -30°C gelagert. Man erhielt gelbe Kristalle. Die vereinigte Ausbeute betrug 3,92 g (86%).

¹H-NMR (C₆D₆): δ = 0,11 (s, 18 H, SiMe₃), 5,16, 6,62 (pseudo-t, 4 H CpH)
¹³C-NMR (C₆D₆): δ = 5,0 (s, SiMe₃), 109,6, 124,9 (2s, CpH)
¹¹B-NMR (C₆D₆): δ = 47,4 (s)
MS: m/z (%): 461 (5, M⁺), 446 (3, M⁺-Me), 91 (80, Zr⁺), 66 (40, Cp⁺)

### Beispiel 11

### Herstellung von [iPr₂NB(C₅H₅)C₆H₅NH] (10)

Zu einer Suspension von 2,64 g (30 mmol) Cyclopentadienylnatrium in 25 ml Hexan wurde bei 0°C eine Lösung von 5,4 g (30 mmol) *i*pr₂NBCl₂ in 10 ml Hexan getropft. Man ließ die Mischung auf Raumtemperatur kommen und rührte für weitere 2 Stunden. Das ausgefallenen NaCl wurde abfiltriert und das Filtrat langsam zu einer Suspension aus 3,15 g (32 mmol) Li-anilid in 20 ml Toluol bei 0°C getropft. Man ließ die Reaktion auf Raumtemperatur erwärmen und rührte zur Vervollständigung der Reaktion noch über Nacht weiter. Dann wurde das Lösungsmittel am Vakuum entfernt und der verbliebene gelbe Rückstand in 20ml Benzol aufgenommen, filtriert und das Filtrat vom Lösungsmittel befreit. Der so erhaltene Feststoff wurde bei 85°C im Hochvakuum sublimiert. Man erhielt 7,91 g (*i*Pr₂NB(C₅H₅)(C₆H₅NH) in nahezu quantitativer Ausbeute.

¹H-NMR(499,658 MHz, CD₂Cl₂) : δ = 1,23(br. d, 12 H, CHCH₃), 2,86(m, 2H, C₅H₅), 3,59(m, 2H, CHCH₃), 5,08(br. s, 1H, NH), 6,2 - 7,2(m, 8H, C₅H₅, C₆H₅)
¹¹B-NMR(160,310 MHZ, CD₂Cl₂) : δ = 30,06.
¹³C-NMR(125,639 MHz, CD₂-Cl₂) : δ = 23,96, 45,71, 43,44, 46,58 (br), 133,28 (cp), 135,50 (cp), 137,74 (cp), 118,70, 119,64, 128,78, 146,10.
MS(EI) [m/z,%]: 268[M⁺, 20], 253 [M⁺-Me, 50], 93[C₆H₅NH₂⁺, 100], 65[C₅H₅⁺, 30]. Korrekte Elementaranalyse.

### Beispiel 12

### Herstellung von [iPR₂NB(C₅H₅)C₆H₅N{Ti(NMe₂)₂}] (11)

0,83 g (3,09 mmol) (10) wurden in in 15 ml Toluol gelöst und bei -78°C mit 0,69 g (3,09 mmol) [Ti(NMe₂)₄] in 5 ml Toluol versetzt. Nach 20 min Rühren bei -78°C, ließ man das Reaktionsgemisch langsam auf Raumtemperatur erwärmen und rührte für weitere 2 Stunden bei Raumtemperatur und eine weitere bei 40°C. Die flüchtigen Anteile wurden im Vakuum entfernt, der orange-rote Rückstand in 20 ml Hexan aufgenommen und die so erhaltene Lösung über Nacht bei -30°C zum Kristallisieren gekühlt. Man erhielt 0,97 g (78 %) des Titankomplexes (11) als orangen Feststoff.

¹H-NMR(499,658 MHz, CD₂Cl₂) : δ = 0,90 (br., 6H, CHCH₃), 1,45 (br.,6H, CHCH₃), 2,97 (s, 12H, NMe₂), 3,31 (br., 2H, CHCH₃), 5,94 (m, 2H, C₅H₄), 6,44 (m, 2H, C₅H₄), 6,73 (m, 2H, C₆H₅), 6,83 (m, 1H, C₆H₅).
¹¹B-NMR(160,310 MHz, CD₂Cl₂) : δ = 27,76
¹³C-NMR(125,639 MHz, CD₂Cl₂) : δ = 21,36 (br), 27,01 (br), 44,62 (br), 46,11 (br), 47,90 (NMe₂) 120,95 (cp), 124,00 (cp), 115,81, 119,99, 128,16, 155,48.
MS (El) [m/z, %] : 402 [M⁺, 45], 387 [M⁺-Me, 5], 358 [M⁺-NMe₂, 65], 314 [M⁺-2 NMe₂, 100], 93 [C₆H₅NH₂⁺, 95], 64 [C₅H₄⁺, 45]. Korrekte Elementaranalyse.

### Beispiel 13

### Herstellung von [iPr₂NB(C₅H₄)C₆H₅N{TiCl₂}] (12)

Zu einer Lösung von 0,17 g (0,42 mmol) des Titankomplexes (11) in 10 ml Hexan wurde 0,50 g (4,60 mmol) (CH₃)₃SiCl in 2 ml Hexan bei 0°C zugegeben. Die Lösung wurde langsam auf Raumtemperatur erwärmt und über Nacht gerührt. Der ausgefallene gelbe Niederschlag wurde durch abdekantieren der überstehenden Lösung isoliert und zweimal mit je 10 ml Hexan gewaschen. Der so erhaltene Feststoff wurde am Vakuum getrocknet. Man erhielt 0,16 g des Titankomplexes (12) in nahezuquantitativer Ausbeute.
¹H-NMR(499,658 MHz, CD₂Cl₂) : δ = 0,90 (d, 6H,J³ = 6,71 Hz, CHCH₃), 1,54 (d, 6H, J³ = 6,71 Hz, CHCH₃), 3,14 (m, 1H. J³ = 6,71 Hz, CHCH₃), 3,41 (m, 1H, CHCH₃), 6,44 (m, 2H, C₅H₄), 7,08(m, 2H, C₅H₄), 6,91 (m, 2H, C₆H₅), 7,14(m, 1H,C₆H₅),7,38(m, 2H, C₆H₅).
¹¹B-NMR(160,310 MHz, CD₂Cl₂) : δ = 28.39.

¹³C-NMR(125,639 MHz, CD₂Cl₂) : δ = 21,40, 27,72, 45,20, 47,28, 122,52 (cp), 124,32, 127,21, 129,62, 152,39.

MS(El) [m/z, %] : 384[M⁺, 15], 369[M⁺-Me, 30], 348[M⁺-Cl, 50], 333[M⁺-Cl-2 Me, 20], 93[C₆H₅NH₂⁺, 70], 64[C₅H₄, 25]. Korrekte Elementaranalyse.

### Beispiel 14

### Herstellung von [iPr₂NB(C₅H₅)tBuNH] (13)

Zu einer Suspension von 3,96 g (45 mmol) Cyclopentadienylnatrium in 50 ml Hexan wurde bei 0°C eine Lösung von 8,19 g (45 mmol) *i*pr₂NBCl₂ in 30 ml Hexan getropft. Man ließ die Mischung auf Raumtemperatur kommen und rührte für weitere 16 Stunden. Das ausgefallenen NaCl wurde abfiltriert und das Filtrat langsam zu einer Suspension aus 3,52 g (45 mmol) LitBuNH in 20 ml Toluol bei 0°C getropft. Man ließ die Reaktion auf Raumtemperatur erwärmen und rührte zur Vervollständigung der Reaktion noch über Nacht weiter. Dann wurde das Lösungsmittel am Vakuum entfernt und der verbliebene gelbe Rückstand in 50 ml Benzol aufgenommen, filtriert und das Filtrat vom Lösungsmittel befreit. Der so erhaltene Feststoff wurde im Hochvakuum getrocknet. Man erhielt 8,83 g (*i*Pr₂NB(C₅H₅) (tBuNH) (13) (79 %).

¹H-NMR(499,658 MHz, C₆D₆) : δ = 1,08 (br. d, 6H, CHCH₃), 1,12 (br d, 6H, CHCH₃), 1,11 (s, 9H, C(CH₃)₃), 1,18(s, 9H, C(CH₃)₃), 3,24 (m, 2H. CHCH₃), 3,37 (m, 2H, CHCH₃), 2,86 (m, 2H, CH_{2cp}), 3,05 (m, 2H, CH_{2cp}), 6,40 - 6,76 (m, 6H, C₅H₄). ¹¹B-NMR (160,310 MHz, C₆,D₆) : δ = 29,82

¹³C -NMR(125.639 MHz, C₆D₆): δ = 23,30, 33,31, 33,74, 33,96, 43,12, 46,9, 49,37, 49,64, 131,82, 133,82, 135,39. MS (EI) [m/z, %] : 248 [M⁺,10], 233 [M⁺-Me, 45]. Korrekte Elementaranalyse.

### Beispiel 15

### Herstellung von [iPr₂NB(C₅H₄)tBuN{Ti(NMe₂)₂}] (14)

0,71 g (2,87 mmol) ipr₂NB(cp)tBuNH (13) wurden in in 10 ml Toluol gelöst und bei -78°C mit 0,64 g (2,87 mmol) [Ti(NMe₂)₄] gelöst in 5 ml Toluol versetzt. Nach 20 min Rühren bei -78°C, ließ man das Reaktionsgemisch langsam auf Raumtemperatur erwärmen und rührte für weitere 2 Stunden bei Raumtemperatur und eine weitere bei 40°C. Die flüchtigen Anteile wurden im Vakuum entfernt, der orange-rote Rückstand in 20 ml Hexan aufgenommen und die so erhaltene Lösung über Nacht bei -30°C zum Kristallisieren gekühlt. Man erhielt 0,90 g (82 %) des Titankomplexes (14) als orangen Feststoff.
¹H-NMR(499,658) MHz, C₆D₆) : δ = 1,17 (br d, 12H, CHCH₃), 3,19 (s, 12H, NMe₂), 3,62 (m, 2H, CHCH₃), 5,92(m, 2H, C₅H₄), 6,49 (m, 2H, C₅H₄), 6,73 (m, 2H, C₆H₅), 6,83 (m, 1H, C₆H₅), 7,14 (m, 2H, C₆H₅).
¹¹B-NMR(160,310 MHz, C₆D₆) : δ= 29,82.

MS(EI) [m/z,%]: 382 [M⁺,5], 339 [M⁺-NMe₂,60], 248 [M⁺-Ti-2NMe₂,35], 233 [M⁺-Ti 2NMe₂-Me,100].

### Beispiel 16

### Herstellung von [iPr₂NB(C₅H₄)tBuN{TiCl₂}] (15)

Zu einer Lösung von 0,45 g (1,18 mmol) des Titankomplexes (14) in 10 ml Hexan wurden 0,65 g (6 mmol) (CH₃)₃SiCl in 2 ml Hexan bei 0°C zugegeben. Die Lösung wurde langsam auf Raumtemperatur erwärmt und für weitere 4 Stunden gerührt. Der ausgefallene gelbe Niederschlag wurde durch Abdekantieren der überstehenden Lösung isoliert und zweimal mit je 10 ml Hexan gewaschen. Der so erhaltene Feststoff wurde am Vakuum getrocknet. Man erhielt 0,38 g des Titankomplexes (15) (88 %).

¹H-NMR(499,658 MHz, C₆D₆) : δ = 0,85 (d, 6H, J³ = 6,71 Hz, CHCH₃), 1,32 (d, 6H, J³ = 6,71 Hz, CHCH₃), 3,04 (m, 1H, CHCH₃), 4,03(m, 1H, CHCH₃), 6,22 (m, 2H, C₅H₄), 6,83(m, 2H, C₅H₄).

¹¹B-NMR(160,310 MHz, C₆D₆) : δ = 32,25.
MS(EI) [m/z,%] : 365 [M⁺, 5], 350 [M⁺-Me,45], 322 [M⁺-*i*Pr,50].

### Beispiel 17

### Ethylen Polymerisation:

### Allgemeine Polymerisationsvorschrift:

In einem mit Inertgas gespülten 250 ml-Autoklaven wurde das Metallocen ( mit dem Zentralmetall M = Ti oder Zr) in den in Tabelle 1 angegebenen Mengen in wenig Toluol gelöst. Dazu wurde dann die entsprechende Menge MAO (Methylalumoxan 10 Gew.% in Toluol) (Al:M = 100:1) zugegeben. Man erreichte so ein Gesamtvolumen von ca. 100 ml. Danach wurde Ethylen bis auf einen Druck von 5 bar aufgepreßt. Die Polymerisation wurde bei 20°C für 15 min durchgeführt. Anschließend wurde der Autoklav entspannt und das Polymer abfiltriert. Weitere Daten sind der Tabelle 1 zu entnehmen.

**Tabelle 1:**

| Komplex | Al:M (mol:mol) | Temp. (°C) | Polym. zeit (min) | Einwaage (mg/g) | Ausbeute (g) | Activität (gPE/ gcat.*h) | eta-Wert (dl/g) |
|---|---|---|---|---|---|---|---|
| 7 | 100 | 20 | 15 | 18,6 | 24,4 | 5250 | 3,35 |
| 9 | 1000 | 20 | 15 | 24,4 | 17,04 | 3777 | n.d. |
| 9 | 650 | 60 | 5 | 10,2 | 7,74 | 9106 | n.d. |
| 12 | 1000 | 60 | 10 | 15,2 | 1,80 | 711 | 1,52 |
| 15 | 1000 | 60 | 30 | 13,2 | 0,98 | 148 | 0,93 |
| n.d.: not determined | | | | | | | |

## Patentansprüche

1. Metallocenkomplexe von Metallen der 4., 5. oder 6. Nebengruppe des Periodensystems, bei denen mindestens ein substituierter oder unsubstituierter Cyclopentadienylrest mit einem Element der Gruppe III des Periodensystems verbunden ist, welches Element der Gruppe III des Periodensystems Bestandteil eines Brückengliedes zwischen diesem Cyclopentadienylrest und dem Metallatom ist und welches Element der Gruppe III des Periodensystems als einzigen weiteren Substituenten eine stickstoff-, phosphor- oder schwefelorganische Gruppe trägt.

2. Metallocenkomplexe nach Anspruch 1 der allgemeinen Formel I 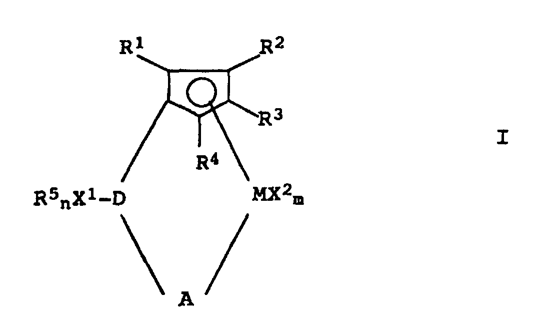 in welcher die Variablen folgende Bedeutung haben:
M ein Metallatom der 4., 5. oder 6. Nebengruppe des Periodensystems,
D ein Element der Gruppe III des Periodensystems,
R¹,R²,R³,R⁴ Wasserstoff, C₁- bis C₁₀-Alkyl, 5-7-gliedriges Cycloalkyl, welches seinerseits mit einer C₁-C₁₀-Alkylgruppe substituiert sein kann, C₆- bis C₁₅-Aryl oder Arylalkyl, wobei zwei benachbarte Reste R¹ bis R⁴ auch 5-7-gliedrige cyclische Gruppen bilden können, welche ihrerseits mit C₁-C₁₀-Alkylgruppen oder SiR⁶₃-Gruppen substituiert sein können oder weitere anellierte Ringsysteme enthalten können,
R⁵ Wasserstoff, C₁-C₁₀-Alkyl, C₆-C₁₅-Aryl oder -Arylalkyl oder C₁-C₁₀-Trialkylsilyl,
R⁶ C₁- bis C₄-Alkyl,
m Zahl der Nebengruppe des Metallatoms M minus 2,
n 2 wenn X¹ Stickstoff oder Phosphor bedeutet, 1 wenn X¹ Schwefel bedeutet,
X¹ Stickstoff, Phosphor oder Schwefel,
X² Wasserstoff, C₁-C₁₀-Hydrocarbyl, N(C₁-C₁₅-Hydrocarbyl)₂ oder Halogen,
A ein Rest 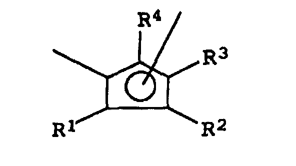 oder ein Rest, welcher über ein Sauerstoff-, Schwefel-, Stickstoff- oder Phosphoratom an M koordiniert ist.

3. Metallocenkomplexe nach Anspruch 2, in welchen M Titan, Zirkon oder Hafnium ist.

4. Metallocenkomplexe nach Anspruch 2, in welchen M ein Metall der 5. oder 6. Nebengruppe des Periodensystems ist.

5. Metallocenkomplexe nach den Ansprüchen 2 bis 4, in welchen A -O-, -S-, -NR⁹-, -PR⁹-, -OR⁹, -SR⁹, -NR⁹₂ oder -PR⁹₂ ist, worin R⁹ Wasserstoff oder Alkyl-, Aryl-, Silyl-, halogenierten Alkyl- oder halogenierten Arylgruppen mit bis zu 10 Kohlenstoffatomen bedeutet.

6. Metallocenkomplexe nach Anspruch 2, in welchen A ein Rest 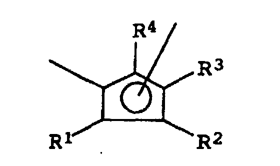 ist.

7. Metallocenkomplexe nach Anspruch 2, in welchen A eine Gruppe
―ZR⁷ ₂―NR⁸―
ist, in welcher
Z Silizium oder Kohlenstoff und
R⁷,R⁸ Wasserstoff, Silyl, Alkyl, Aryl oder Kombinationen dieser Reste mit bis zu 10 Kohlenstoff- oder Siliziumatomen
bedeuten.

8. Metallocenkomplexe nach den Ansprüchen 2 bis 7, in welchen X¹ Stickstoff bedeutet.

9. Metallocenkomplexe nach den Ansprüchen 2 bis 7, in welchen R⁵ C₁-C₁₀-Trialkylsilyl bedeutet.

10. Metallocenkomplexe nach Anspruch 5, ausgewählt aus der Gruppe [*i*PR₂NB(C₅H₅)C₆H₅N{Ti(NMe₂)₂}] oder [*i*Pr₂NB(C₅H₄)C₆H₅N{TiCl₂}].

11. Metallocenkomplexe nach Anspruch 6, ausgewählt aus der Gruppe Cl₂Ti[(C₅H₄)₂BN(SiMe₃)₂], (Me₂N)₂Ti[(C₅H₄)₂BN(SiMe₃)₂], (Me₂N)ClTi[(C₅H₄)₂BN(SiMe₃)₂], (i-Pr)₂NB(C₅H₄)₂Ti(Cl)NMe₂ oder (Me₃Si)₂NB(C₅H₄)₂ZrCl₂.

12. Verfahren zur Herstellung von Metallocenkomplexen gemäß Anspruch 6, **dadurch gekennzeichnet, daß** man eine Verbindung R⁵ₙX¹-BY₂ (II), in welcher Y Halogen bedeutet, mit einer Verbindung 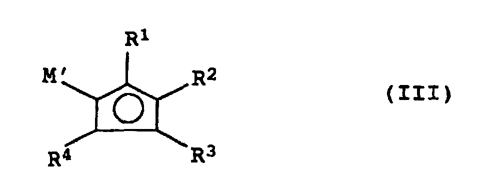 in welcher M' ein Alkali- oder Erdalkalimetall bedeutet, in Gegenwart eines Metallalkyls umsetzt und das Reaktionsprodukt dann mit einer M-Halogenid-Verbindung und zuletzt mit einem Oxidationsmittel reagieren läßt.

13. Verwendung der Metallocenkomplexe gemäß den Ansprüchen 1 bis 11 als Katalysatorkomponenten für die Homo- und Copolymerisation von C₂-C₁₀-α-Olefinen.

## Claims

1. A metallocene complex of a metal of transition group IV, V or VI of the Periodic Table, in which at least one substituted or unsubstituted cyclopentadienyl radical is bound to an element of group III of the Periodic Table which is in turn a constituent of a bridge between this cyclopentadienyl radical and the metal atom and bears an organonitrogen, organophosphorus or organosulfur group as sole further substituent.

2. A metallocene complex as claimed in claim 1 having the formula I 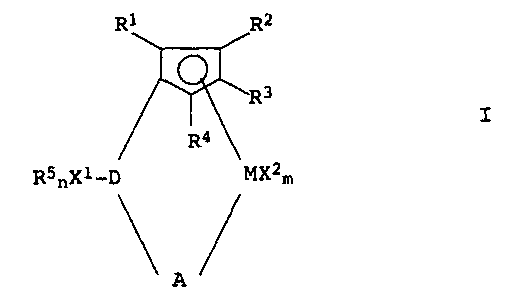 where the variables have the following meanings:
M is a metal atom of transition group IV, V or VI of the Periodic Table,
D is an element of group III of the Periodic Table,
R¹,R²,R³,R⁴ are each hydrogen, C₁- to C₁₀-alkyl, 5-7-membered cycloalkyl which may in turn bear a C₁-C₁₀-alkyl group as substituent, C₆- to C₁₅-aryl or arylalkyl, where two adjacent radicals R¹ to R⁴ may also form 5-7-membered cyclic groups which may in turn bear C₁-C₁₀-alkyl groups or SiR⁶₃ groups as substituents or include further fused-on ring systems,
R⁵ is hydrogen, C₁-C₁₀-alkyl, C₆-C₁₅-aryl or -arylalkyl or C₁-C₁₀-trialkylsilyl,
R⁶ is C₁-C₄-alkyl,
m is the number of the transition group of the metal atom M minus 2,
n is 2 when X¹ is nitrogen or phosphorus and is 1 when X¹ is sulfur,
X¹ is nitrogen, phosphorus or sulfur,
X² is hydrogen, C₁-C₁₀-hydrocarbyl, N(C₁-C₁₅-hydrocarbyl)₂ or halogen,
A is a radical 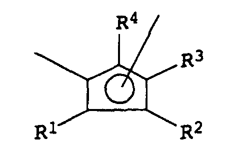 or a radical which is coordinated to M via an oxygen, sulfur, nitrogen or phosphorus atom.

3. A metallocene complex as claimed in claim 2 in which M is titanium, zirconium or hafnium.

4. A metallocene complex as claimed in claim 2 in which M is a metal of transition group 5 or 6 of the Periodic Table.

5. A metallocene complex as claimed in any of claims 2 to 4 in which A is -O-, -S-, -NR⁹-, -PR⁹-, -OR⁹, -SR⁹, -NR⁹₂ or -PR⁹₂, where R⁹ is hydrogen or an alkyl, aryl, silyl, halogenated alkyl or halogenated aryl group having up to 10 carbon atoms.

6. A metallocene complex as claimed in claim 2 in which
A is a radical

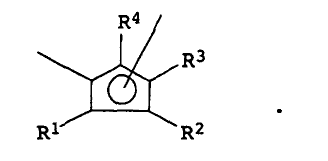

7. A metallocene complex as claimed in claim 2 in which A is a group
―ZR⁷ ₂―NR⁸―
where
Z is silicon or carbon and
R⁷,R⁸ are hydrogen, silyl, alkyl, aryl or combinations of these radicals having up to 10 carbon or silicon atoms.

8. A metallocene complex as claimed in any of claims 2 to 7 in which X¹ is nitrogen.

9. A metallocene complex as claimed in any of claims 2 to 7 in which R⁵ is C₁-C₁₀-trialkylsilyl.

10. A metallocene complex as claimed in claim 5 selected from the group consisting of [*i*PR₂NB(C₅H₅)C₆H₅N{Ti(NMe₂)₂}] and [*i*Pr₂NB(C₅H₄)C₆H₅N{TiCl₂}].

11. A metallocene complex as claimed in claim 6 selected from the group consisting of Cl₂Ti[(C₅H₄)₂BN(SiMe₃)₂], (Me₂N)₂Ti[(C₅H₄)₂BN(SiMe₃)₂], (Me₂N)ClTi[(C₅H₄)₂BN(SiMe₃)₂], (i-Pr)₂NB(C₅H₄)₂Ti(Cl)NMe₂ and (Me₃Si)₂NB(C₅H₄)₂ZrCl₂.

12. A process for preparing a metallocene complex as claimed in claim 6, which comprises reacting a compound R⁵ₙX¹-BY₂ (II), where Y is halogen, with a compound 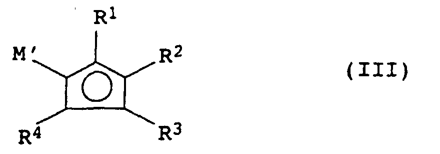 where M' is an alkali metal or alkaline earth metal, in the presence of a metal alkyl and allowing the reaction product to react with an M halide compound and finally with an oxidant.

13. The use of a metallocene complex as claimed in any of claims 1 to 11 as a catalyst component for the homopolymerization and copolymerization of C₂-C₁₀-α-olefins.

## Revendications

1. Complexes de métallocènes de métaux des sous-groupes 4, 5 ou 6 de la Classification Périodique, dans lesquels au moins un groupe cyclopentadiényle substitué ou non est relié à un élément du groupe III de la Classification Périodique, cet élément du groupe III de la Classification Périodique étant constituant d'un pont entre le groupe cyclopentadiényle et l'atome de métal, et cet élément du groupe III de la Classification Périodique portant en tant qu'unique autre substituant un groupe organique azoté, phosphoré ou sulfuré.

2. Complexes de métallocènes selon revendication 1, répondant à la formule générale 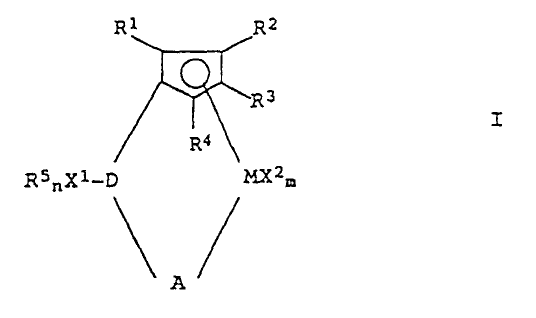 dans laquelle les symboles ont les significations suivantes :
M : un atome de métal du sous-groupe 4, 5 ou 6 de la Classification Périodique,
D : un élément du groupe III de la Classification Périodique,
R¹, R², R³, R⁴ : chacun l'hydrogène, un groupe alkyle en C1-C10, un groupe cycloalkyle de 5 à 7 chaînons qui peut lui-même porter un substituant alkyle en C1-C10,
un groupe aryle en C6-C15 ou arylalkyle, deux groupes voisins parmi les groupes R¹ à R⁴ pouvant également former des groupes cycliques de 5 à 7 chaînons, qui peuvent eux-mêmes porter des substituants alkyle en C1-C10 ou SiR⁶₃, ou peuvent contenir d'autres systèmes cycliques condensés,
R⁵ : l'hydrogène, un groupe alkyle en C1-C10, aryle ou arylalkyle en C6-C15 ou tri-(alkyle en C1-C10)silyle,
R⁶ : un groupe alkyle en C1-C4,
m : le chiffre du sous-groupe de l'atome de métal M moins 2,
n : 2 lorsque X¹ représente l'azote ou le phosphore, 1 lorsque X¹ représente le soufre,
X¹ : l'azote, le phosphore ou le soufre,
X² : l'hydrogène, un groupe hydrocarbonyle en C1-C10 un groupe N(hydrocarbyle en C1-C15)₂ ou un halogène,
A : un groupe 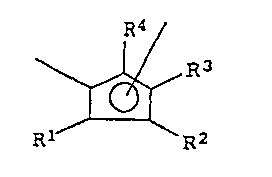
ou un groupe coordonné à M par l'intermédiaire d'un atome d'oxygène, de soufre, d'azote ou de phosphore.

3. Complexes de métallocènes selon la revendication 2, pour lesquels M représente le titane, le zirconium ou le hafnium.

4. Complexes de métallocènes selon la revendication 2, pour lesquels M représente un métal du sous-groupe 5 ou 6 de la Classification Périodique.

5. Complexes de métallocènes selon les revendications 2 à 4 pour lesquels A représente -O-, -S-, -NR⁹-, -PR⁹-, -OR⁹, -SR⁹, -NR⁹₂ ou -PR⁹₂ , R⁹ représentant l'hydrogène ou un groupe alkyle, aryle, silyle, alkyle halogéné, aryle halogéné contenant jusqu'à dix atomes de carbone.

6. Complexes de métallocènes selon la revendication 2 pour lesquels A représente un groupe

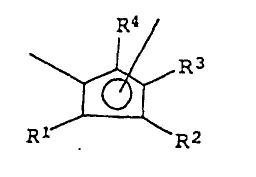

7. Complexes de métallocènes selon la revendication 2 pour lesquels A représente un groupe
―ZR⁷ ₂―NR⁸―
dans lequel
Z représente le silicium ou le carbone et
R⁷, R⁸ représentent chacun l'hydrogène, un groupe silyle, alkyle, aryle ou une combinaison de tels groupes contenant jusqu'à dix atomes de carbone ou de silicium.

8. Complexes de métallocènes selon les revendications 2 à 7 pour lesquels X¹ représente l'azote.

9. Complexes de métallocènes selon les revendications 2 à 7, pour lesquels R⁵ représente un groupe tri-(alkyle en C1-C10)silyle.

10. Complexes de métallocènes selon la revendication 5, choisis parmi [*i*PR₂NB(C₅H₅)C₆H₅N{Ti(Nme₂)₂}] et [*i*Pr₂NB(C₅H₄)C₆H₅N{TiCl₂}].

11. Complexesde métallocènes selon revendication 6, choisis parmi Cl₂Ti[C₅H₄)₂BN(SiMe₃)₂], (Me₂N)₂Ti[(C₅H₄)₂BN(SiMe₃)₂], (Me₂N)ClTi[(C₅H₄)₂BN(SiMe₃)₂], (i-Pr)₂NB(C₅H₄)₂Ti(Cl)NMe₂ et (Me₃Si)₂NB(C₅H₄)₂ZrCl₂.

12. Procédé pour la préparation des complexes de métallocènes selon la revendication 6, **caractérisé en ce que** l'on fait réagir un composé de formule R⁵ₙX¹-BY₂ (II) dans laquelle Y représente un halogène, avec un composé de formule 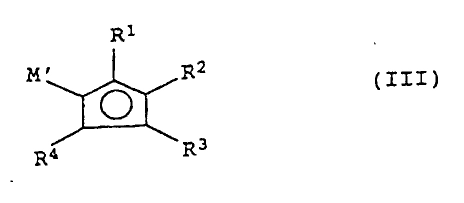 dans laquelle M' représente un métal alcalin ou alcalino-terreux, en présence d'un alkylmétal, après quoi on fait réagir le produit obtenu avec un dérivé d'halogénure de M et finalement avec un agent oxydant.

13. Utilisation des complexes de métallocènes selon les revendications 1 à 11 en tant que composants de catalyseurs pour l'homo- et la copolymérisation d'alpha-oléfines en C2-C10.
